# EUROPÄISCHE PATENTSCHRIFT

(11) **EP 0 788 928 B1**
(45) Veröffentlichungstag und Bekanntmachung des Hinweises auf die Patenterteilung: **14.08.2002**
(21) Anmeldenummer: 97101792.6
(22) Anmeldetag: 05.02.1997
(51) Int. Cl.: B60R 5/00

(54) **Transsportvorrichtung für Kraftfahrzeuge, wie z.B. für Kombinationskraftwagen oder Grossraum-Personenkraftwagen**
Transport device in motor vehicles such as estate cars or large-volume passenger cars
Dispositif de transport dans des véhicules automobiles comme par exemple véhicules de type break ou familial à grand volume intérieur

(30) Priorität: 09.02.1996 DE 19604714
(43) Veröffentlichungstag der Anmeldung: 13.08.1997
(73) Patentinhaber: PETER BUTZ GmbH & Co Verwaltungs-KG, 40764 Langenfeld (DE)
(72) Erfinder: Sitzler, Wolfgang, 42111 Wuppertal (DE); Ledüc, Peter, 40468 Düsseldorf (DE); Rath, Thomas, 42697 Solingen (DE)
(74) Vertreter: Patentanwälte Ostriga & Sonnet

(56) Entgegenhaltungen:
- CH-A- 438 119
- CH-A- 524 977
- DE-A- 3 400 143
- DE-A- 4 132 954
- DE-A- 4 213 821
- DE-U- 1 895 469
- DE-U- 29 506 071
- DE-U- 29 612 062
- FR-A- 1 131 259
- FR-A- 2 415 026
- FR-A- 2 677 312
- GB-A- 2 302 316
- US-A- 4 958 760

## Beschreibung

Die Erfindung betrifft eine Transportvorrichtung für Kraftfahrzeuge, wie z.B. für Kombinationskraftwagen oder für Großraum-Personenkraftwagen, entsprechend dem Oberbegriff des Patentanspruchs 1.

Eine derartige Transportvorrichtung ist in der FR-A-1 131 259 beschrieben. Beim Bekannten ist ein kofferähnlicher Behälter aus hartem oder weichem Werkstoff mittels Gurte kraftfahrzeugseitig arretiert. Der bekannte Behälter ist etwa oberhalb der Fondsitzreihe einer Limousine im Dach-Innenraum unterhalb des Fahrzeughimmels mittels zweier Gurte befestigt, von denen jeder zwei Gurtteile aufweist. Die dem Behälter zugewandten Teilungsenden eines jeden Gurtteils sind mittels Niete am Behälter befestigt. Das vom Behälter wegweisende freie Ende eines jeden Gurtteils ist mit einem hakenleistenartigen Beschlagteil versehen, welches jeweils eine außen am Fahrzeugdach angeordnete Regenrinne, die als Gegenbeschlagteil dient, hintergreift.

Zwischen dem vom Behälter wegweisenden Beschlagteil und dem am Behälter befestigten Teilungsende eines jeden Gurtteils ist ein Spannmittel in Form einer Spannschnalle angeordnet. Die Außenform des bekannten Behälters ist derart an die Kontur des Dachinnenraums angepasst, daß der Behälter den Dachinnenraum satt ausfüllt. Mittels der Spannschlösser der zweiteiligen Gurte ist lediglich ein festes Verspannen des Behälters gegen den Fahrzeughimmel möglich.

Von der nicht zur engeren Gattung zählenden FR-A-2 415 026 ist eine Transportbehälter-Sicherungsvorrichtung mit z.B. auf einem Laderaumboden befestigten Gurten bekannt, auf welchen jeweils das Ladegut hintergreifende stufenlos oder stufenweise verschiebbare und arretierbare Winkelanschläge angeordnet sind.

Ausgehend von der eingangs beschriebenen bekannten Transportvorrichtung gemäß der FR-A-1 131 259, liegt der Erfindung die Aufgabe zugrunde, die bekannte Transportvorrichtung so weiterzuentwickeln, daß sie, insbesondere im Zusammenhang mit Kombinationskraftwagen oder Großraum-Personenkraftwagen (sogenannte Multivans) noch universeller als bisher zu handhaben ist.

Entsprechend der Erfindung wird diese Aufgabe dadurch gelöst, daß der die beiden Gurtteile aufweisende Gurt ein langgestrecktes Führungsmittel bildet, welches sich in oder quer zur Fahrtrichtung des Kraftfahrzeugs erstreckt, daß die Spannmittel der beiden Gurtteile zugleich eine Längenänderung des jeweiligen Gurtteils gestatten, derart, daß der Behälter entlang des Gurtes dadurch auf dem Laderaumboden verschoben und arretiert werden kann, daß das eine Gurtteil mittels seines Spannmittels verlängert und das andere Gurtteil mittels seines Spannmittels verkürzt wird.

Je nach Ausführungsform ist der erfindungsgemäße Behälter an dem beispielsweise beidendig auf dem Laderaumboden befestigten, vom Gurt gebildeten, langgestreckten Führungsmittel hin und her verstellbar und zusätzlich arretierbar.

Das erfindungsgemäße langgestreckte Führungsmittel gestattet dem erfindungsgemäßen Behälter grundsätzlich eine hinreichende Halterung, zugleich aber eine Verschiebung, welche erforderlich sein kann, wenn zusätzliches Ladegut verstaut werden muß, welches ansonsten bei Verwendung sonstiger Transportvorrichtungen (z.B. gemäß dem DE-GM 94 17 440) wegen ungünstiger Raumausnutzung nicht zuladbar wäre, weil eine solche bekannte Transportvorrichtung nur an vorbestimmten Befestigungsstellen lösbar zu arretieren ist.

Die Gurte, welche entsprechend der Erfindung langgestreckte Führungsmittel bilden, könnenderart im Kraftfahrzeug angebracht sein, daß ein möglichst großer Verschiebeweg des Behälters realisierbar ist, um auf diese Weise eine möglichst große Freiheit bei der Positionierung des Behälters zu erreichen.

Weitere Erfindungsmerkmale sind zusätzlichen Unteransprüchen zu entnehmen.

In den Zeichnungen sind bevorzugte Ausführungsbeispiele entsprechend der Erfindung näher dargestellt, es zeigt,

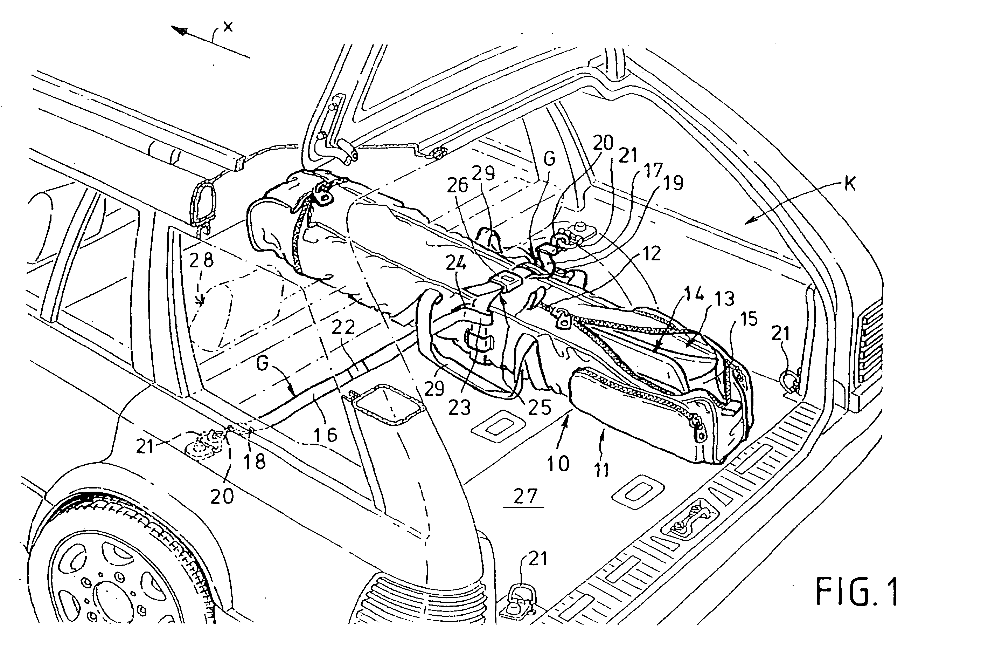

Fig. 1 eine räumliche Darstellung, zum Teil geschnitten, des Heckbereichs eines Kombinationskraftwagens mit einem als Skisack ausgebildeten Behälter.

Die Transportvorrichtung 10 weist einen Behälter 11 aus flexiblem textilem Werkstoff mit einer mittels eines Reißverschlusses 12 verschließbaren (gemäß Fig. 1 teilweise geöffneten) Ladeöffnung 13 auf, durch welche hindurch das langgestreckte Ladegut 14, ein paar Skier, in den Innenraum 15 des Behälters 11 hineingeschoben wurden.

Die Transportvorrichtung 10 besitzt weiterhin einen aus zwei Gurtteilen 16, 17 bestehenden Gurt G, welcher an jedem seiner vom Behälter 11 wegragenden freien Enden 18, 19 ein hakenartiges Beschlagteil 20 aufweist, welches in ein korrespondierendes kraftfahrzeugseitig befestigtes ösenartiges Gegenbeschlagteil 21 lösbar eingreift.

Der Gurt G ist mit einem Spannmittel 22 versehen, damit seine Straffung in der zwischen den beiden Gegenbeschlagteilen 21 befindlichen Position erfolgen kann.

Beide Gurtteile 16, 17 bilden an ihren Teilungsenden 24 Schlaufen 23, von denen nur die Schlaufe 23 des Teilungsendes 24 des Gurtteils 16 in Fig. 1 zu sehen ist. Jede Schlaufe 23 ist von einem den Behälter 11 gänzlich umspannenden Befestigungsgurt 25, der eine Spannschnalle 26 besitzt, durchgriffen.

Auch das Gurtteil 17 ist in nicht dargestellter Weise mit einem Spannmittel 22 versehen. Die Spannmittel 22 der Gurtteile 16, 17 gestatten zugleich eine Längenänderung des jeweiligen Gurtteils 16, 17, zumal dann, wenn die Spannmittel 22 an Art einer Durchzugsschnalle ausgebildet sind.

Die Funktion der in Fig. 1 dargestellten Vorrichtung ist folgende: Anhand von Fig. 1 ist vorstellbar, daß ein Teil der drei Fondsitze, und zwar die beiden rechten Fondsitze, in eine horizontale Lage nach vorn und unten geklappt sind, um in etwa eine in Fahrtrichtung x nach vorn reichende Verlängerung des Laderaumbodens 27 zu schaffen. In der dargestellten Position wird der Gurt G mittels einer Spannschnalle 22 oder mittels beider Spannschnallen 22 derart straff angespannt und der Befestigungsgurt 25 so gesichert, daß der Behälter 11 etwa im Bereich seiner halben axialen Länge, etwa in Höhe seines Schwerpunkts, quer zur Fahrtrichtung x des Kraftfahrzeuges gesichert ist.

Für den Fall, daß der Behälter 11 nach Flachklappen des Fond-Einzelsitzes 28 so weit wie möglich quer zur Fahrtrichtung x nach links auf dem Laderaumboden 27 verschoben werden muß, werden das Gurtteil 17 derart verlängert und das Gurtteil 16 derart verkürzt, was mittels der jeweiligen Spannschnalle 22 geschieht, daß der Behälter 11 seine nicht dargestellte Position links im Kofferraum K des Kraftwagens einnimmt.

Für den Fall, daß der die Skier 14 enthaltende Behälter 11 ausgebaut werden sollte, genügt es, den Befestigungsgurt 25 zu öffnen und die Ladeöffnung 13 mittels des Reißverschlusses 12 gänzlich zu schließen, worauf der Behälter 11 wie eine Skitasche verwendet und mittels der beiden Traggurte 29 transportiert werden kann. Denkbar ist auch, nach Entspannen des Gurtes G mittels mindestens eines Spannteiles 22 die hakenartigen Beschlagteile 20 aus den ösenartigen Gegenbeschlagteilen 21 auszuhaken, um den Gurt G alternativ oder zusätzlich als Traghilfe zu benutzen.

## Patentansprüche

1. Transportvorrichtung (10) für Kraftfahrzeuge, wie z.B. für Kombinationskraftwagen oder Großraum-Personenkraftwagen, mit einem Behälter (11) für insbesondere langgestrecktes Ladegut (14), wie z.B. für Skier, mit einer Ladeöffnung (13) für das Ladegut und mit Mitteln (12) zum lösbaren Verschließen der Ladeöffnung (13) des Behälters (11) sowohl in seiner Betriebsposition als auch in seiner außerhalb des Kraftfahrzeuges befindlichen Ruheposition, und mit mindestens einem der Arretierung des Behälters (11) dienenden, zwei Gurtteile (16, 17) aufweisenden Gurt (G), dessen vom Behälter (11) weg ragende freie Enden je ein Beschlagteil (20) zur lösbaren Befestigung an einem korrespondierenden kraftfahrzeugseitig befestigten Gegenbeschlagteil (21) aufweisen, wobei der Gurt (G) an seinen von seinen Beschlagteilen (20) wegweisenden Teilungsenden (24) am Behälter (11) gehalten ist und wobei jeder Gurtteil (16, 17) ein Spannmittel (22) zu seiner Straffung in der kraftfahrzeugseitig befestigten Position aufweist, **dadurch gekennzeichnet, daß** der die beiden Gurtteile (16, 17) aufweisende Gurt (G) ein langgestrecktes Führungsmittel bildet, welches sich in oder quer zur Fahrtrichtung (x) des Kraftfahrzeugs erstreckt, daß die Spannmittel (22) der beiden Gurtteile (16, 17) zugleich eine Längenänderung des jeweiligen Gurtteils (16, 17) gestatten, derart, daß der Behälter (11) entlang des Gurtes (G) dadurch auf dem Laderaumboden (27) verschoben und arretiert werden kann, daß das eine Gurtteil (17) mittels seines Spannmittels (22) verlängert und das andere Gurtteil (16) mittels seines Spannmittels (22) verkürzt wird.

2. Transportvorrichtung nach Anspruch 1, **dadurch gekennzeichnet, daß** die Teilungsenden (24) Schlaufen bilden, welche von einem den Behälter (11) mindestens teilweise umspannenden Befestigungsgurt (25) durchgriffen sind.

3. Transportvorrichtung nach einem der Ansprüche 1 oder 2, **dadurch gekennzeichnet, daß** kraftfahrzeugseitige Befestigungsstellen (21) zur beidendigen Halterung des Gurtes (G) je entlang einer Linie angeordnet oder entlang einer Linie verstellbar angeordnet sind.

4. Transportvorrichtung nach Anspruch 3, **dadurch gekennzeichnet, daß** die kraftfahrzeugseitigen Befestigungsstellen (21) jeweils entlang einer Geraden angeordnet oder verschiebbar sind.

## Claims

1. Transporting device (10) for motor vehicles, such as, for example, estate cars or large-capacity passenger cars, with a container (11) for in particular an elongate load (14), such as, for example, skis, with a loading opening (13) for the load and with means (12) for releasably closing the loading opening (13) of the container (11) both in its operating position and in its rest position situated outside the motor vehicle, and with at least one strap (G) which serves for arresting the container (11), has two strap parts (16, 17) and the free ends, projecting away from the container (11), of which each have a fitting (20) for releasable fastening to a corresponding counter-fitting (21) fastened to the motor vehicle, the strap (G) being held on the container (11) at its separation ends (24) pointing away from its fittings (20), and each strap part (16, 17) having a tightening means (22) for tightening it in the position fastened to the motor vehicle, **characterised in that** the strap (G) having the two strap parts (16, 17) forms an elongate guide means which extends in or transversely to the direction of travel (x) of the motor vehicle, **in that** the tightening means (22) of the two strap parts (16, 17) permit at the same time a change in length of the respective strap part (16, 17), in such a way that the container (11) can be displaced along the strap (G) on the loading-space floor (27) and arrested by the one strap part (17) being lengthened by means of its tightening means (22) and the other strap part (16) being shortened by means of its tightening means (22).

2. Transporting device according to Claim 1, **characterised in that** the separation ends (24) form loops, through which passes a fastening strap (25) which at least partially encompasses the container (11).

3. Transporting device according to one of Claims 1 and 2, **characterised in that** fastening points (21) on the vehicle, for fixing the strap (G) at both ends, are each arranged along a line or arranged adjustably along a line.

4. Transporting device according to Claim 3, **characterised in that** the fastening points (21) on the vehicle are each arranged or displaceable along a straight line.

## Revendications

1. Dispositif de transport (10) pour véhicules automobiles, tel que, par exemple, des véhicules de type break ou familial ou des voitures particulières à grand volume intérieur, avec un récipient (11), en particulier pour un produit à charger (14) allongé, tel que par exemple pour des skis, avec une ouverture de chargement (13) pour le produit à charger et avec des moyens (12) pour fermer de façon désolidarisable l'ouverture de chargement (13) du récipient (11) tant à sa position de fonctionnement qu'également à sa position de repos, se trouvant à l'extérieur du véhicule automobile, et avec au moins une sangle (G) servant à bloquer le récipient (11), présentant deux parties de sangle (16, 17) dont les extrémités libres s'écartant du récipient (11) présentent chacune une partie de ferrure (20) pour la fixation désolidarisable sur une partie de ferrure conjuguée (21) fixée côté véhicule, correspondante, la sangle (G) étant maintenue sur le récipient (11), à ses extrémités de division (24) s'écartant de ses parties de ferrure (20) et chaque partie de sangle (16, 17) présentant un moyen tendeur (22) pour la tendre à la position fixée, du côté du véhicule automobile, **caractérisé en ce que** la sangle (G) présentant les deux parties de sangle (16, 17) forment un moyen de guidage allongé qui s'étend dans ou transversalement par rapport à la direction de roulage (x) du véhicule automobile, **en ce que** les moyens tendeurs (22) des deux parties de ceinture (16, 17) permettent en même temps une modification de longueur de chaque partie de sangle (16, 17), de manière que le récipient (11) puisse être déplacé et bloqué le long de la sangle (G), de ce fait, sur le fond d'espace de chargement (27), **en ce qu'**une partie de sangle (17) est allongée à l'aide de son moyen tendeur (22) et l'autre partie de sangle (16) est raccourcie à l'aide de son moyen tendeur (22).

2. Dispositif de transport selon la revendication 1, **caractérisé en ce que** les extrémités de division (24) forment des boucles traversées par une sangle de fixation (25) entourant au moins partiellement le récipient (11).

3. Dispositif de transport selon l'une des revendications 1 ou 2, **caractérisé en ce que** des points de fixation (21) situés du côté du véhicule automobile sont disposés pour assurer la fixation aux deux extrémités de la sangle (G), respectivement le long d'une ligne, ou bien sont disposés réglables le long d'une ligne.

4. Dispositif de transport selon la revendication 3, **caractérisé en ce que** les points de fixation (21) situés du côté du véhicule sont disposés ou déplaçables, chaque fois le long d'une ligne droite.
